# EUROPEAN PATENT APPLICATION

(11) **EP 3 722 833 A1**
(43) Date of publication of application: **14.10.2020**
(21) Application number: 18884929.3
(22) Date of filing: 07.12.2018
(51) Int. Cl.: G01S 17/93, G01S 7/484

(54) **METHOD OF OBTAINING OBSTACLE INFORMATION, AND METHOD AND DEVICE FOR EMITTING LASER PULSE**

(30) Priority: 08.12.2017 CN 201711303228
(71) Applicant: Hesai Photonics Technology Co., Ltd, Shanghai 201821 (CN)
(72) Inventor: PAN, Zhengqing, Shanghai 201821 (CN); XIANG, Shaoqing, Shanghai 201821 (CN); LI, Yifan, Shanghai 201821 (CN)
(74) Representative: Appelt, Christian W.
(86) International application number: PCT/CN2018/119721
(87) International publication number: WO 2019/109997

(57) **Abstract**

An obstacle information obtaining method, a laser pulse transmitting method and apparatus are disclosed. The laser pulse transmitting method includes: transmitting a first laser pulse at a first time point; and transmitting a second laser pulse at a second time point, where a peak power of the first laser pulse is less than a peak power of the second laser pulse, a time interval between the second time point and the first time point is greater than T, wherein T is a duration between a time point of transmitting a laser pulse and a time point of receiving a laser pulse echo signal reflected by a near field obstacle. By applying the foregoing solution, due to the lower power of the first laser pulse, stray light will not cause voltage saturation of the detection circuit. Therefore, the first laser pulse reflected by a near field obstacle can be detected, and the problem of the measurement blind zone of the near field obstacle, which is caused by the stray light inside the lidar, is resolved cost-effectively. In addition, high strength of the signal of the second laser pulse ensures normal detection of a far field obstacle.

## Description

This application claims priority to Chinese Patent Application No. 201711303228.8, filed with the Chinese Patent Office on December 8, 2017 and entitled "OBSTACLE INFORMATION OBTAINING METHOD AND LASER PULSE TRANSMITTING METHOD AND APPARATUS", which is incorporated herein by reference in its entirety.

### BACKGROUND

### Technical Field

Embodiments of the present invention relate to the field of environment sensing technologies, and in particular, to an obstacle information obtaining method, a laser pulse transmitting method and apparatus.

### Related Art

Due to capabilities of obtaining shape and distance information of all obstacles within a one-hundred-meter range of a vehicle, a lidar has become a sensor necessary for autonomous driving. In a current lidar system, obstacle information is primarily obtained by pulse ranging, that is, by transmitting a laser pulse that has a narrow pulse width and a high peak power, and then a time delay of an echo impulse is measured through an avalanche photo diode detector (APD) to calculate distance information of an obstacle.

For a lidar system based on a pulse ranging method, a small part of transmitted pulses is directly received by the APD during a light pulse transmitting process, causing a detection circuit of a highly sensitive APD to enter a nonlinear saturation region. When the detection circuit is saturated, an amplification scale of a pulse pedestal of stray light is greater than an amplification scale of a top pulse, thereby increasing a pulse width of a stray light pulse in the detection circuit. Consequently, a laser pulse echo signal reflected by a near field obstacle is submerged in a posterior pedestal of the stray light, the position of the near field obstacle cannot be determined, a measurement blind zone is formed, and the application of the lidar in the field of autonomous driving is affected drastically. To resolve the above problem, related products are based on two technical solutions: 1. A smaller transmitting pulse width is applied to reduce the width of the measurement blind zone; 2. behind the APD, a quickly adjustable gain amplifier is used to replace an original fixed gain amplifier. The adjustable gain amplifier applies a small gain to front strong reflection light and applies a large gain to rear weak reflection light, thereby appropriately reducing gain saturation effects of the stray light and the width of the measurement blind zone.

In the related technical solutions, the solution that reduces the transmitting pulse width leads to increase of a detection bandwidth, and brings more radio frequency noise. In addition, costs of a transmitting unit and a detection unit will rise sharply. The solution that uses an adjustable gain amplifier only optimizes the amplification circuit behind the APD of the detection circuit to improve a dynamic range but without changing an internal gain of the APD. Therefore, in most cases, due to the high gain of the APD, stray light signals have been saturated in the APD, and succeeding amplification circuits cannot resolve the saturation effect of the APD itself or the blind zone effect thereby caused.

### SUMMARY

Embodiments of the present invention aim to cost-effectively resolve a technical problem that a measurement blind zone of a near field obstacle is caused by stray light inside a lidar.

To resolve the above technical problem, an embodiment of the present invention provides a laser pulse transmitting method. The method includes: transmitting a first laser pulse at a first time point; and transmitting a second laser pulse at a second time point, where a peak power of the first laser pulse is less than a peak power of the second laser pulse, a time interval between the second time point and the first time point is greater than T, and T is a duration between a time point of transmitting a laser pulse and a time point of receiving a laser pulse echo signal reflected by a near field obstacle.

Optionally, the near field is a region corresponding to a measurement blind zone arising from submersion of a laser pulse echo signal reflected by a space obstacle, where the submersion is caused by voltage saturation of a detection circuit that occurs because the transmitted laser pulse is directly received by a detection module.

An embodiment of the present invention provides a laser pulse transmitting apparatus, including: a waveform generator and a laser coupled thereto, where the waveform generator is configured to output a first drive current to the laser at a first time point, and output a second drive current to the laser at a second time point, where a current value of the second drive current is greater than a current value of the first drive current, an interval between the second time point and the first time point is greater than T, and T is a duration between a time point of transmitting a laser pulse and a time point of receiving a laser pulse echo signal reflected by a near field obstacle; and the laser is configured to generate and transmit a first laser pulse at the first time point based on the first drive current input by the waveform generator; and generate and transmit a second laser pulse at the second time point based on the second drive current input by the waveform generator.

Optionally, the near field is a region corresponding to a measurement blind zone arising from submersion of a laser pulse echo signal reflected by a space obstacle, where the submersion is caused by voltage saturation of a detection circuit that occurs because the transmitted laser pulse is directly received by a detection module.

Optionally, the laser is a semiconductor laser.

An embodiment of the present invention provides a laser pulse transmitting apparatus, including: a laser, and a first branch and a second branch that are coupled thereto, where the first branch includes a first branch fiber and a first attenuator that are coupled to each other; and the second branch includes a second branch fiber and a second attenuator that are coupled to each other, where an attenuation value of the second attenuator is less than an attenuation value of the first attenuator, a delay brought by the second branch fiber is greater than a delay brought by the first branch fiber, a delay difference therebetween is T, and T is a duration between a time point of transmitting a laser pulse and a time point of receiving a laser pulse echo signal reflected by a near field obstacle.

Optionally, the near field is a region corresponding to a measurement blind zone arising from submersion of a laser pulse echo signal reflected by a space obstacle, where the submersion is caused by voltage saturation of a detection circuit that occurs because the transmitted laser pulse is directly received by a detection module.

Optionally, the laser is a semiconductor laser.

An embodiment of the present invention provides a laser pulse transmitting apparatus, including: a first transmitting unit, configured to transmit a first laser pulse at a first time point; and a second transmitting unit, configured to transmit a second laser pulse at a second time point, where a peak power of the first laser pulse is less than a peak power of the second laser pulse, a time interval between the second time point and the first time point is greater than T, and T is a duration between a time point of transmitting a laser pulse and a time point of receiving a laser pulse echo signal reflected by a near field obstacle.

Optionally, the near field is a region corresponding to a measurement blind zone arising from submersion of a laser pulse echo signal reflected by a space obstacle, where the submersion is caused by voltage saturation of a detection circuit that occurs because the transmitted laser pulse is directly received by a detection module.

An embodiment of the present invention provides an obstacle information obtaining method, including: calculating distance information of a near field obstacle based on an echo signal of a first laser pulse; and calculating distance information of a far field obstacle based on an echo signal of a second laser pulse.

An embodiment of the present invention provides a computer-readable storage medium, on which a computer instruction is stored. When executed, the computer instruction performs the steps of the laser pulse transmitting method.

An embodiment of the present invention provides a system, including a memory and a processor. The memory stores a computer instruction executable on the processor. When running the computer instruction, the processor performs the steps of the laser pulse transmitting method.

An embodiment of the present invention provides a computer-readable storage medium, on which a computer instruction is stored. When executed, the computer instruction performs the steps of the obstacle information obtaining method.

An embodiment of the present invention provides a system, including a memory and a processor. The memory stores a computer instruction executable on the processor. When running the computer instruction, the processor performs the steps of the obstacle information obtaining method.

Compared with the prior art, the technical solutions in the embodiments of the present invention have the following beneficial effects:
In the embodiments of the present invention, a lower-power first laser pulse is transmitted at a first time point, and a higher-power second laser pulse is transmitted at a second time point. Due to the lower power of the first laser pulse, stray light will not cause voltage saturation of the detection circuit. Therefore, the first laser pulse echo signal reflected by a near field obstacle can be detected, and the problem of the measurement blind zone of the near field obstacle, which is caused by the stray light inside the lidar, is resolved cost-effectively. In addition, high strength of the signal of the second laser pulse ensures normal detection of a far field obstacle.

### BRIEF DESCRIPTION OF THE DRAWINGS

FIG. 1 is a schematic diagram of an APD detection voltage in a lidar system in the prior art;
FIG. 2 is a detailed flowchart of a laser pulse transmitting method according to an embodiment of the present invention;
FIG. 3 is a schematic diagram of a laser pulse according to an embodiment of the present invention;
FIG. 4 is a schematic diagram of an APD detection voltage according to an embodiment of the present invention;
FIG. 5 is a detailed flowchart of an obstacle information obtaining method according to an embodiment of the present invention;
FIG. 6 is a detailed flowchart of another obstacle information obtaining method according to an embodiment of the present invention;
FIG. 7 is a schematic structural diagram of a laser pulse transmitting apparatus according to an embodiment of the present invention;
FIG. 8 is a schematic structural diagram of another laser pulse transmitting apparatus according to an embodiment of the present invention; and
FIG. 9 is a schematic structural diagram of still another laser pulse transmitting apparatus according to an embodiment of the present invention.

### DETAILED DESCRIPTION

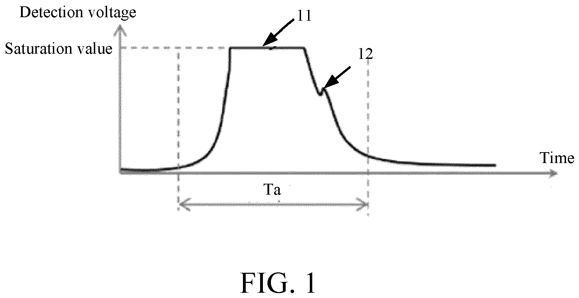

In a lidar system in the prior art, a transmitted laser pulse is directly absorbed by an APD. Consequently, a detection circuit is saturated, a laser pulse echo signal reflected by a near field obstacle is submerged, and a measurement blind zone is formed, as shown in FIG. 1.

Referring to FIG. 1, after a lidar transmits a laser pulse, voltage signals detected by the APD include: a voltage signal 11 generated by stray light that causes saturation of the detection circuit, where the stray light is generated because the transmitted laser pulse is directly absorbed by the APD; and a laser pulse echo signal 12 generated because the laser pulse is reflected by the near field obstacle. The stray light directly absorbed by the APD causes saturation of the detection circuit, so that the voltage signal 11 is equal to a voltage saturation value, and is greater than the laser pulse echo signal 12 transmitted by the near field obstacle. Consequently, the echo signal 12 is submerged, and distance information of the near field obstacle cannot be obtained. A duration of a saturation voltage signal caused by the stray light is a duration Ta corresponding to the measurement blind zone. Within the duration Ta corresponding to the measurement blind zone, a detector cannot correctly receive the reflected laser pulse echo signal, and thus cannot obtain the distance information of the obstacle.

In the technical solutions in the prior art, the problem of the measurement blind zone caused by the stray light is tackled by reducing a transmitting pulse width and by using an adjustable gain amplifier. In the two solutions, the solution that reduces the transmitting pulse width leads to increase of a detection bandwidth, and brings more radio frequency noise. In addition, costs of a transmitting unit and a detection unit will rise sharply. The solution that uses an adjustable gain amplifier only optimizes the amplification circuit behind the APD of the detection circuit to improve a dynamic range but without changing an internal gain of the APD. Therefore, in most cases, due to the high gain of the APD, stray light signals have been saturated in the APD, and succeeding amplification circuits cannot resolve the saturation effect of the APD itself or the blind zone effect thereby caused. Therefore, neither the solution that reduces the transmitting pulse width nor the solution that uses the adjustable gain amplifier can cost-effectively resolve the problem of the measurement blind zone caused by the stray light.

In the embodiments of the present invention, a lower-power first laser pulse is transmitted at a first time point, and a higher-power second laser pulse is transmitted at a second time point. Due to the lower power of the first laser pulse, stray light will not cause voltage saturation of the detection circuit. Therefore, the first laser pulse echo signal reflected by a near field obstacle can be detected, and the problem of the measurement blind zone of the near field obstacle, which is caused by the stray light inside the lidar, is resolved cost-effectively. In addition, high strength of the signal of the second laser pulse ensures normal detection of a far field obstacle.

To make the foregoing objects, features, and beneficial effects of the present invention more comprehensible, specific embodiments of the present invention are described in detail below with reference to the accompanying drawings.

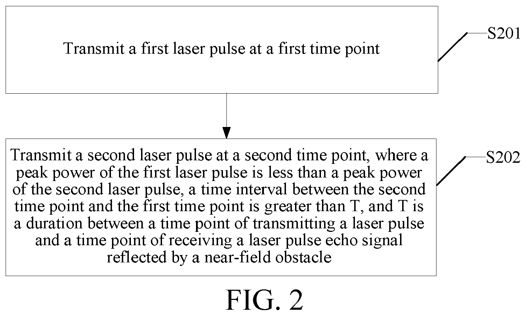

Referring to FIG. 2, an embodiment of the present invention provides a laser pulse transmitting method. The method includes:
Step S201: Transmit a first laser pulse at a first time point.
Step S202: Transmit a second laser pulse at a second time point, where a peak power of the first laser pulse is less than a peak power of the second laser pulse, a time interval between the second time point and the first time point is greater than T, and T is a duration between a time point of transmitting a laser pulse and a time point of receiving a laser pulse echo signal reflected by a near field obstacle.

In a lidar system in the prior art, the transmitted laser pulse is directly absorbed by the APD. Consequently, the detection circuit is saturated, the laser pulse echo signal reflected by the near field obstacle is submerged, and a measurement blind zone is formed. Therefore, this embodiment of the present invention uses a dual-pulse transmitting method. That is, a weak first laser pulse is transmitted at a first time point to measure a near field obstacle, and a strong second laser pulse is transmitted at a second time point to measure a far field obstacle.

In specific implementation, the weak first laser pulse can be used to measure the near field obstacle. Therefore, in order to improve accuracy of measuring the near field obstacle, a time interval between the second time point and the first time point may be defined to be greater than T, where T is a reflection delay period of the near field obstacle, that is, a duration between a time point of transmitting a laser pulse and a time point of receiving an echo signal of the same laser pulse reflected by the near field obstacle.

In specific implementation, the near field may be defined as a region corresponding to the measurement blind zone, where the measurement blind zone arises from submersion of a laser pulse echo signal reflected by a space obstacle, where the submersion is caused by voltage saturation of a detection circuit that occurs because the transmitted laser pulse is directly received by a detection module.

By applying the above solution, because the signal of the first laser pulse is weak, the stray light will not cause APD saturation even if the first laser pulse is directly absorbed by the APD system. Therefore, pulse signals reflected by subsequent obstacles can be effectively separated, and the measurement blind zone can be eliminated. Meanwhile, the signal of the second laser pulse is strong, and can ensure normal detection of far field obstacles.

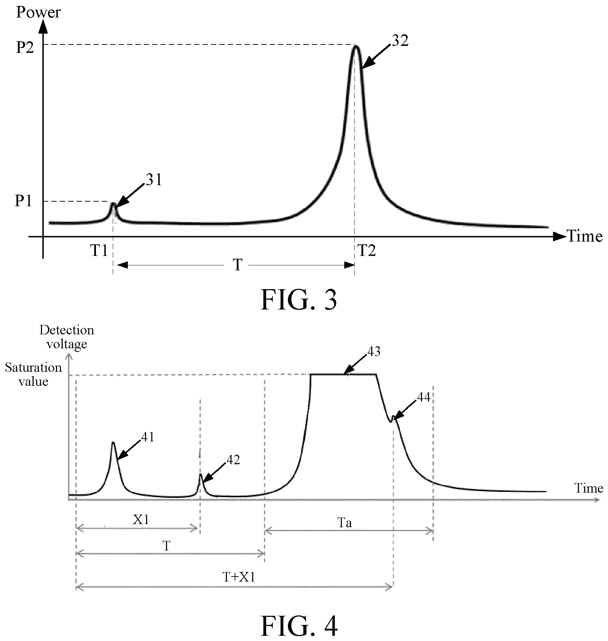

To enable those skilled in the art to better understand and implement the present invention, an embodiment of the present invention provides a schematic diagram of a laser pulse, as shown in FIG. 3.

Referring to FIG. 3, at a time point T1, a first laser pulse 31 is transmitted, with the peak power being PI; and at a time point T2, a second laser pulse 32 is transmitted, with the peak power being P2, where P2 is much greater than PI, and a time interval between T2 and T1 is T.

Because PI is low and stray light will not cause APD saturation, the echo signal of the first laser pulse 31 reflected by the near field obstacle can be effectively separated. Meanwhile, the signal of the second laser pulse 32 is strong, and can ensure normal detection of far field obstacles.

To enable those skilled in the art to better understand and implement the present invention, an embodiment of the present invention provides a schematic diagram of an APD detection voltage, as shown in FIG. 4.

Referring to FIG. 4, after a lidar system transmits a laser pulse shown in FIG. 3, the voltage signals detected by the APD include: a first voltage signal 41 caused by stray light, where the stray light is generated because the transmitted first laser pulse 31 is directly absorbed by the APD; an echo signal 42 of the first laser pulse 31 reflected by the near field obstacle, where a time delay of reflecting the first laser pulse 31 by the near field obstacle is XI; a second voltage signal 43 generated by the stray light that causes saturation of the detection circuit, where the stray light is generated because the second laser pulse 32 is directly absorbed by the APD; and an echo signal 44 of the second laser pulse 32 reflected by the near field obstacle, where a transmitting time interval between the second laser pulse 32 and the first laser pulse 31 is T, a duration of the voltage signal 43 is the duration Ta corresponding to the measurement blind zone, T>Ta, and a time delay of reflecting the second laser pulse 32 by the near field obstacle is T+X1.

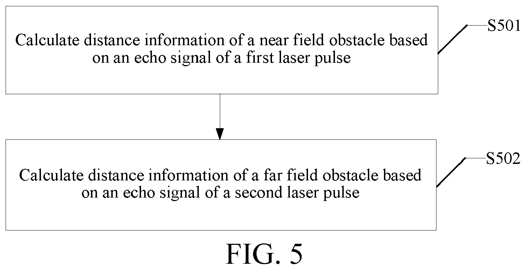

To enable those skilled in the art to better understand and implement the present invention, an embodiment of the present invention provides an obstacle information obtaining method, as shown in FIG. 5.

Referring to FIG. 5, the obstacle information obtaining method may include the following steps:
Step S501: Calculate distance information of a near field obstacle based on an echo signal of a first laser pulse.
Step S502: Calculate distance information of a far field obstacle based on an echo signal of a second laser pulse.

Because the signal of the first laser pulse is weak, the stray light will not cause APD saturation even if the first laser pulse is directly absorbed by the APD system. Therefore, the distance information of near field obstacle can be calculated based on the echo signal of the first laser pulse. Meanwhile, the signal of the second laser pulse is strong, so that the distance information of the far field obstacle is calculated based on the echo signal of the second laser pulse.

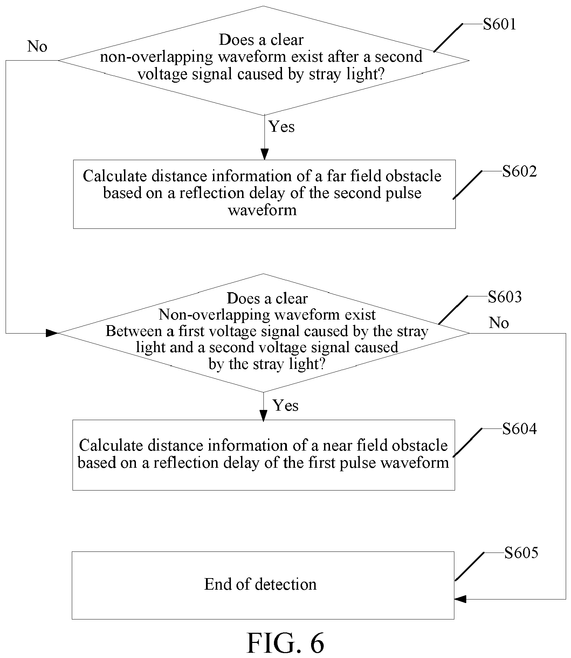

In an embodiment of the present invention, the laser pulse shown in FIG. 3 is transmitted, and the received APD detection voltage signal is shown in FIG. 4. As shown in FIG. 6, an obstacle information obtaining method includes the following steps:
Step S601: Determine whether a clear non-overlapping waveform exists after the second voltage signal 43 caused by the stray light. If such a clear non-overlapping waveform exists, which is then considered as a second pulse waveform, perform step S602; otherwise, perform step S603.

In specific implementation, if only one clear non-overlapping pulse waveform exists after the second voltage signal 43 caused by the stray light inside the lidar, it indicates that the obstacle is in the far field, and the pulse waveform is a second pulse waveform and is an echo signal of the second laser pulse 32 reflected by a far field obstacle. If two clear non-overlapping pulse waveforms exist after the second voltage signal 43 caused by the stray light inside the lidar, the two pulse waveforms are an echo signal of the first laser pulse 31 and an echo signal of the second laser pulse 32 reflected by the far field obstacle, respectively. Because the peak power of the first laser pulse 31 is less than the peak power of the second laser pulse 32, the latter pulse waveform, that is, the echo signal of the second laser pulse 32 reflected by the far field obstacle, is the second pulse waveform.

Step S602: Calculate distance information of a far field obstacle based on a reflection delay of the second pulse waveform.

In specific implementation, because the reflection delay of the second pulse waveform is related to the distance, the distance information of the far field obstacle can be calculated based on the reflection delay of the second pulse waveform.

In specific implementation, because the second laser pulse 32 is transmitted later than the first laser pulse 31 by a delay T, the reflection delay can be calculated based on T+X2 to obtain the distance information of the obstacle. X2 is a duration between the time point of transmitting the second laser pulse 32 and the time point of receiving the echo signal of the second laser pulse 32 reflected by the far field obstacle.

Step S603: Determine whether a clear non-overlapping waveform exists between the first voltage signal 41 caused by the stray light and the second voltage signal 43 caused by the stray light. If such a clear non-overlapping waveform exists, which is then considered as a first pulse waveform, perform step S604; otherwise, perform step S605.

In specific implementation, if no clear non-overlapping waveform exists after the second voltage signal 43 caused by the stray light inside the lidar, it indicates that no obstacle exists in the far field. In this case, an obstacle in the near field needs to be further checked.

When a clear non-overlapping pulse waveform exists between the first voltage signal 41 caused by the stray light and the second voltage signal 43 caused by the stray light, it indicates that an obstacle exists in the near field. The pulse waveform is the first pulse waveform, and is an echo signal of the first laser pulse 31 reflected by the near field obstacle.

Step S604: Calculate distance information of the near field obstacle based on a reflection delay of the first pulse waveform.

In specific implementation, the reflection delay may be calculated based on X1 to obtain the distance information of the near field obstacle. X1 is a duration between the time point of transmitting the first laser pulse 31 and a time point of receiving the echo signal of the first laser pulse 31 reflected by the near field obstacle.

Step S605: The detection ends.

In specific implementation, when no clear non-overlapping second pulse waveform exists after the second voltage signal 43 caused by the stray light inside the lidar, and when no clear non-overlapping first pulse waveform exists between the first voltage signal 41 caused by the stray light and the second voltage signal 43 caused by the stray light, the detection is ended and the conclusion is: no obstacle exists in the far field and the near field.

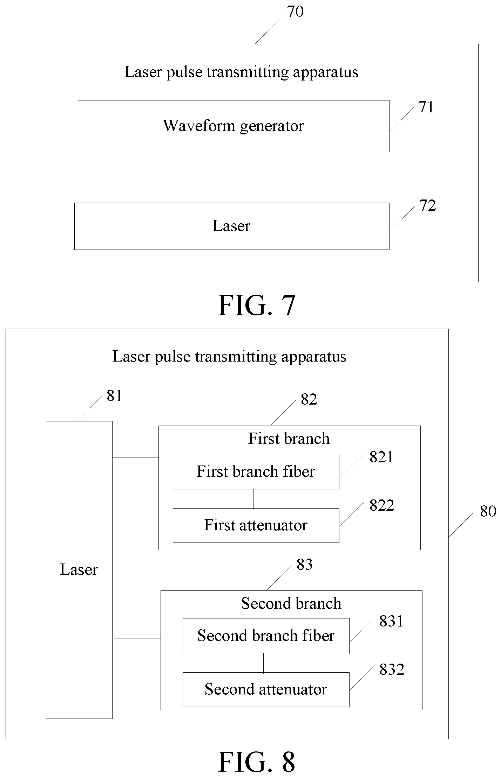

To enable those skilled in the art to better understand and implement the present invention, an embodiment of the present invention provides a schematic structural diagram of a laser pulse transmitting apparatus, as shown in FIG. 7.

Referring to FIG. 7, an embodiment of the present invention provides a laser pulse transmitting apparatus 70, including: a waveform generator 71 and a laser 72 coupled thereto.

The waveform generator 71 is configured to output a first drive current to the laser 72 at a first time point, and output a second drive current to the laser 72 at a second time point, where a current value of the second drive current is greater than a current value of the first drive current, an interval between the second time point and the first time point is greater than T, and T is a duration between a time point of transmitting a laser pulse and a time point of receiving a laser pulse echo signal reflected by a near field obstacle.

The laser 72 is configured to generate and transmit a first laser pulse at the first time point based on the first drive current input by the waveform generator 71; and generate and transmit a second laser pulse at the second time point based on the second drive current input by the waveform generator 71.

In specific implementation, the near field is a region corresponding to a measurement blind zone arising from submersion of a laser pulse echo signal reflected by a space obstacle, where the submersion is caused by voltage saturation of a detection circuit that occurs because the transmitted laser pulse is directly received by a detection module.

In a specific implementation, the laser may be a semiconductor laser, or may be another type of laser.

To enable those skilled in the art to better understand and implement the present invention, an embodiment of the present invention provides a schematic structural diagram of a laser pulse transmitting apparatus, as shown in FIG. 8.

As shown in FIG. 8, an embodiment of the present invention provides a laser pulse transmitting apparatus 80, including: a laser 81, and a first branch 82 and a second branch 83 that are coupled thereto. The first branch 82 includes a first branch fiber 821 and a first attenuator 822 that are coupled to each other. The second branch 83 includes a second branch fiber 831 and a second attenuator 832 that are coupled to each other. An attenuation value of the second attenuator 832 is less than an attenuation value of the first attenuator 822, a delay brought by the second branch fiber 831 is greater than a delay brought by the first branch fiber 821, a delay difference therebetween is T, and T is a duration between a time point of transmitting a laser pulse and a time point of receiving a laser pulse echo signal reflected by a near field obstacle.

In specific implementation, the near field is a region corresponding to a measurement blind zone arising from submersion of a laser pulse echo signal reflected by a space obstacle, where the submersion is caused by voltage saturation of a detection circuit that occurs because the transmitted laser pulse is directly received by a detection module.

In a specific implementation, the laser may be a semiconductor laser, or may be another type of laser.

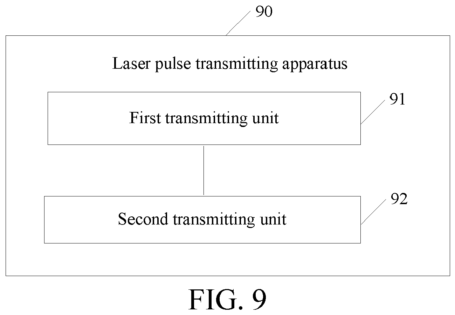

To enable those skilled in the art to better understand and implement the present invention, an embodiment of the present invention provides a schematic structural diagram of a laser pulse transmitting apparatus, as shown in FIG. 9.

Referring to FIG. 9, an embodiment of the present invention provides a laser pulse transmitting apparatus 90, including: a first transmitting unit 91, and a second transmitting unit 92.

The first transmitting unit 91 is configured to transmit a first laser pulse at a first time point.

The second transmitting unit 92 is configured to transmit a second laser pulse at a second time point, where a peak power of the first laser pulse is less than a peak power of the second laser pulse, a time interval between the second time point and the first time point is greater than T, and T is a duration between a time point of transmitting a laser pulse and a time point of receiving a laser pulse echo signal reflected by a near field obstacle.

In specific implementation, the near field is a region corresponding to a measurement blind zone arising from submersion of a laser pulse echo signal reflected by a space obstacle, where the submersion is caused by voltage saturation of a detection circuit that occurs because the transmitted laser pulse is directly received by a detection module.

An embodiment of the present invention provides a computer-readable storage medium, on which a computer instruction is stored. When executed, the computer instruction performs the steps of any one of the laser pulse transmitting methods.

An embodiment of the present invention provides a system, including a memory and a processor. The memory stores a computer instruction executable on the processor. When running the computer instruction, the processor performs the steps of any one of the laser pulse transmitting methods.

In a specific implementation, a work procedure and a principle of the transmitting apparatus 90 may refer to the descriptions of the methods provided in the foregoing embodiments. Details are not described herein.

An embodiment of the present invention provides a computer-readable storage medium, on which a computer instruction is stored. When executed, the computer instruction performs the steps of any one of the obstacle information obtaining methods.

An embodiment of the present invention provides a system, including a memory and a processor. The memory stores a computer instruction executable on the processor. When running the computer instruction, the processor performs the steps of any one of the obstacle information obtaining methods.

A person of ordinary skill in the art may understand that all or a part of the steps of the methods in the embodiments may be implemented by a program instructing relevant hardware. The program may be stored in a computer readable storage medium. The storage medium may include: a ROM, a RAM, a magnetic disk, or an optical disc.

Although the present invention is disclosed above, the present invention is not limited to this. A person of ordinary skill in the art can make various variations and modifications without departing from the spirit and scope of the present invention. Therefore, the protection scope of the present invention shall be subject to a range defined by claims.

## Claims

1. A laser pulse transmitting method, comprising:
transmitting a first laser pulse at a first time point; and
transmitting a second laser pulse at a second time point, wherein a peak power of the first laser pulse is less than a peak power of the second laser pulse, a time interval between the second time point and the first time point is greater than T, wherein T is a duration between a time point of transmitting a laser pulse and a time point of receiving a laser pulse echo signal reflected by a near field obstacle.

2. The laser pulse transmitting method according to claim 1, wherein the near field is a region corresponding to a measurement blind zone arising from submersion of a laser pulse echo signal reflected by a space obstacle, wherein the submersion is caused by voltage saturation of a detection circuit that occurs because the transmitted laser pulse is directly received by a detection module.

3. A laser pulse transmitting apparatus, comprising a waveform generator and a laser coupled thereto, wherein
the waveform generator is configured to output a first drive current to the laser at a first time point, and output a second drive current to the laser at a second time point, wherein a current value of the second drive current is greater than a current value of the first drive current, an interval between the second time point and the first time point is greater than T, wherein T is a duration between a time point of transmitting a laser pulse and a time point of receiving a laser pulse echo signal reflected by a near field obstacle; and
the laser is configured to generate and transmit a first laser pulse at the first time point based on the first drive current input by the waveform generator; and generate and transmit a second laser pulse at the second time point based on the second drive current input by the waveform generator.

4. The laser pulse transmitting apparatus according to claim 3, wherein, the near field is a region corresponding to a measurement blind zone arising from submersion of a laser pulse echo signal reflected by a space obstacle, wherein the submersion is caused by voltage saturation of a detection circuit that occurs because the transmitted laser pulse is directly received by a detection module.

5. The laser pulse transmitting apparatus according to claim 3 or 4, wherein, the laser is a semiconductor laser.

6. A laser pulse transmitting apparatus, wherein comprising: a laser, and a first branch and a second branch that are coupled thereto, wherein:
the first branch comprises a first branch fiber and a first attenuator that are coupled to each other; and
the second branch comprises a second branch fiber and a second attenuator that are coupled to each other, wherein an attenuation value of the second attenuator is less than an attenuation value of the first attenuator, a delay brought by the second branch fiber is greater than a delay brought by the first branch fiber, a delay difference therebetween is T, wherein T is a duration between a time point of transmitting a laser pulse and a time point of receiving a laser pulse echo signal reflected by a near field obstacle.

7. The laser pulse transmitting apparatus according to claim 6, wherein the near field is a region corresponding to a measurement blind zone arising from submersion of a laser pulse echo signal reflected by a space obstacle, wherein the submersion is caused by voltage saturation of a detection circuit that occurs because the transmitted laser pulse is directly received by a detection module.

8. A laser pulse transmitting apparatus, comprising:
a first transmitting unit, configured to transmit a first laser pulse at a first time point; and
a second transmitting unit, configured to transmit a second laser pulse at a second time point, wherein a peak power of the first laser pulse is less than a peak power of the second laser pulse, a time interval between the second time point and the first time point is greater than T, wherein T is a duration between a time point of transmitting a laser pulse and a time point of receiving a laser pulse echo signal reflected by a near field obstacle.

9. The laser pulse transmitting apparatus according to claim 8, wherein the near field is a region corresponding to a measurement blind zone arising from submersion of a laser pulse echo signal reflected by a space obstacle, wherein the submersion is caused by voltage saturation of a detection circuit that occurs because the transmitted laser pulse is directly received by a detection module.

10. An obstacle information obtaining method, comprising:
calculating distance information of a near field obstacle based on an echo signal of a first laser pulse; and
calculating distance information of a far field obstacle based on an echo signal of a second laser pulse.
